# EUROPÄISCHE PATENTSCHRIFT

(11) **EP 0 900 456 B1**
(45) Veröffentlichungstag und Bekanntmachung des Hinweises auf die Patenterteilung: **02.02.2000**
(21) Anmeldenummer: 97921520.9
(22) Anmeldetag: 20.05.1997
(51) Int. Cl.: H01Q 3/26, H04L 25/03

(54) **VERFAHREN UND VORRICHTUNG ZUM RICHTUNGSAUFGELÖSTEN EMPFANG**
PROCESS AND DEVICE FOR RECEPTION WITH DIRECTIONAL RESOLUTION
PROCEDE ET DISPOSITIF DE RECEPTION A RESOLUTION DIRECTIONNELLE

(30) Priorität: 20.05.1996 AT 88796
(43) Veröffentlichungstag der Anmeldung: 10.03.1999
(73) Patentinhaber: Telekom Austria Aktiengesellschaft, 1011 Wien (AT)
(72) Erfinder: FUHL, Josef, A-1040 Wien (AT); BONEK, Ernst, A-1040 Wien (AT)
(74) Vertreter: Müllner, Erwin, Dr.
(86) Internationale Anmeldenummer: AT9700104
(87) Internationale Veröffentlichungsnummer: WO9744855

(56) Entgegenhaltungen:
- EP-A- 0 604 956
- WO-A-95/22873
- GB-A- 2 229 580
- ELECTRONICS AND COMMUNICATION ENGINEERING JOURNAL, Bd. 6, Nr. 4, August 1994, LONDON GB, Seiten 203-214, XP000469556 BARRETT AND ARNOTT: "Adaptive antennas for mobile communications"

## Beschreibung

### TECHNISCHES GEBIET

Verfahren zum richtungsaufgelösten Empfang digitaler Daten durch eine phasengesteuerte Gruppenantenne, die mit einer Schaltung versehen ist, mit der die Richtcharakteristik der Gruppenantenne durch eine adaptive Beeinflussung der Antennengewichtsfaktoren bei der Zusammenschaltung der Einzelantennen einstellbar und adaptierbar ist, wobei zur Einstellung und Adaption der Richtcharacteristik ein entscheidungsrückgekoppeltes Verfahren eingesetzt wird, für welches eine nichtlineare Struktur bestehend aus Vorwärtsfilter, Rückwärtsfilter und Entscheider vorgesehen ist, wobei die Antennensignale zunächst über das Vorwärtsfilter geführt, dann dem Entscheider zugeführt und vom Enscheider über das Rückwärtsfilter geführt werden, wonach das Ausgangssignal des Rückwärtsfilters vom Ausgangssignal des Vorwärtsfilters subtahiert wird. Es betrifft weiters eine Vorrichtung zum richtungsaufgelösten Empfang digitaler Daten, in der eine phasengesteuerte Gruppenantenne vorgesehen ist, die mit einer Schaltung versehen ist, mit der die Richtcharakteristik der Gruppenantenne durch eine adaptive Beeinflussung der Antennengewichtsfaktoren bei der Zusammenschaltung der Einzelantennen einstellbar und adaptierbar ist, wobei zur Einstellung und Adaption der Richtcharakteristik eine nichtlineare Struktur bestehend aus Vorwärtsfilter, Rückwärtsfilter und Entscheider vorgesehen ist, wobei die Einzelantennen an die Eingänge des Vorwärtsfilters angeschlossen sind, der Ausgang des Vorwärtsfilters an einen Subtrahierer angeschlossen ist, dessen Ausgang mit dem Eingang des Entscheiders verbunden ist, dessen Ausgang mit dem Eingang des Rückwärtsfilters verbunden ist, dessen Ausgang mit dem zweiten Eingang des Subtrahierers verbunden ist.

### STAND DER TECHNIK

Richtungsaufgelöster Empfang stellt eine erfolgversprechende neue Technik zur Erhöhung der Reichweite, Verminderung der Gleichkanalstörungen und damit zur Verringerung des Frequenzwiederholabstandes in der Mobilkommunikation dar.

Die Erhöhung der Reichweite ist in schwach besiedelten Gebieten von Interesse, darüber hinaus auch für große Schirmzellen, die den überlaufenden Verkehr von untergeordneten Mikrozellen übernehmen sollen. Ein weiterer interessanter Anwendungsfall ist der Funkzugang für Festnetzteilennehmer ("radio in the local loop", RLL bzw. "radio in the loop", RITL).

Die Gleichkanalstörungen sind bekanntlich der limitierende Einflußfaktor für gut ausgebaute zellulare Mobilfunknetze.

Richtungsaufgelöster Empfang, der ein Maximum des Richtdiagramms der Empfangsantenne in Einfallsrichtung des gewünschten Signals (eines Teilnehmers) und/oder Nullstellen dieses Richtdiagramms in die Einfallsrichtung von Störsignalen legt, vermindert die Gleichkanalstörungen. Diese Störsignale sind z.B. Signale, die entweder anderen Teilnehmern in derselben Zelle zugeordnet sind, oder von Teilnehmern in fremden (entfernteren) Zellen stammen. Durch diese Vorgangsweise wird es möglich, den Frequenzwiederholabstand zu verringern, im Extremfall bis zur Wiederverwendung derselben Frequenz in einer Nachbarzelle (Kanalgruppenzahl gleich eins). Bei heute vorgeschlagenen Verfahren zum richtungsaufgelösten Empfang stellt die Untergrenze der winkelmäßigen Trennung, ab der das Verfahren versagt, ein schwieriges Problem dar. Im Idealfall sollte diese Untergrenze 0° betragen.

Ein Verfahren bzw. eine Vorrichtung der eingangs genannten Art ist aus der EP 604 956 A bekannt. Gemäß diesem Dokument wird das Signal am Ausgang des Entscheiders als Datensignal verwendet, daß heißt es soll dem gesendeten Signal entsprechen. Problematisch ist dabei, daß dieses Signal über das Rückwartsfilter wiederum dem Eingang des Entscheiders zugeführt wird. Kommt es zu einer Fehlentscheidung, so liegt daraufhin am Eingang des Entscheiders ein falsches Signal, was weitere Fehlentscheidungen nach sich ziehen kann. Bei größeren Störungen, z.B. durch Mobiltelefone in Nachbarzellen, ist das Datensignal somit sehr oft stark fehlerhaft. Aus diesem Grund wird dieses System in der EP 604 956 A auch nur bezüglich unmodulierter, sinusförmiger Trägerwellen (Seite 8, Zeilen 32 bis 33, Seite 9, Zeile 48) und bezüglich der Mehrwegeausbreitung (Seite 6, Zeile 4) getestet.

In der GB 2 229 580 A ist eine Schaltung beschrieben, die ein Teil der Schaltung gemäß der EP 604 956 A ist, und zwar das Vorwärtsfilter. Damit kann zwar eine Richtwirkung der Gruppenantenne erzielt werden, die Störungen durch Mehrwegeausbreitungen können aber nicht so gut eliminiert werden wie mit der Schaltung gemäß der EP 604 956 A.

Ein anderes Verfahren bzw. eine andere Vorrichtung zum richtungsaufgelösten Empfang ist in der WO 95/22873 beschrieben. Gemäß diesem Dokument sind die Einzelantennen der Gruppenantenne an Richtungsfilter angeschlossen, die mehrere Ausgänge aufweisen. Diese Signale werden einem gemeinsamen Detektor zugeführt, der auf Grund aller ihm zugeführten Signale die gesendeten Daten detektiert.

Schließlich ist in M. Barrett, R. Arnott, "Adaptive antennas for mobile communications", Electronics and Communication Engineering Journal London, GB, Bd. 6, Nr. 4, August 1994, S 203 - 214; T. Bull, M. Barrett, R. Arnott, "Technology in Smart Antennas for Universal Advanced Mobile Infrastructure (TSUNAMI R2108) - Overview", Proc. RACE Mobile Telecommunications Summit, Cascais, Portugal, November 22-24, 1995, S. 88-97; sowie in M. Tangemann, C. Hoeck, and R. Rheinschmitt, "Introducing Adaptive Array Antenna Concepts in Mobile Communication Systems", RACE Mobile Communications Workshop, May 17-19, 1994, Amsterdam, S. 714-727 ein weiterer Stand der Technik beschrieben.

Es wird dabei eine Gruppenantenne mit veränderbarer Richtcharakteristik verwendet, welche zur Trennung von gewünschtem Teilnehmer-Signal und Störsignalen (in Summe auch als "Interferenz" bezeichnet) eingesetzt wird. Dabei wird das Signal jedes einzelnen Antennenelementes der Gruppe auf eine tiefere Frequenz gemischt (Zwischenfrequenz ZF oder Basisband BB). Diese ZF- bzw. BB-Signale werden nun zeit- und wertdiskretisiert und als Eingangsgrößen für einen leistungsfähigen Algorithmus verwendet. Der Algorithmus, welcher die Richtcharakteristik durch adaptive Beeinflussung der Antennengewichtsfaktoren bestimmt, wird auf einem Signalprozessor oder Ähnlichem realisiert. Bei diesen Algorithmen handelt es sich entweder um "temporal-reference" Algorithmen, wie sie z.B. in S. Ratnavel, A. Paulraj and A.G. Constantinides "MMSE Space-Time Equalization for GSM Cellular Systems", Proc. Institute of Electrical and Electronics Engineers, IEEE, Vehicular Technology Conference 1996, VTC '96, Atlanta, Georgia, S. 331-335, E. Lindskog, A. Ahlen and Sternad, , "Spatio-Temporal Equilization for Mulipath Environments in Mobile Radio Applications", Proc. Institute of Electrical and Electronics Engineers, Vehicular Technology Conference 1995, VTC '95, Chicago, Illinois, USA, July 25-28, 1995, S. 399-403, und O. Munoz and J. Fernandez, "Adaptive Arrays for frequency non-selective and selective channels", Proc. EUSIPCO '94, European Conference for Signal Processing, Edinburgh, S. 1536-1539 beschrieben sind, oder um "spatial-reference" Algorithmen, wie sie z.B. in M. Haardt and J.A. Nossek, "Unitary ESPRIT: How to obtain an increased Estimation Accuracy with a Reduced Computational Burden", IEEE Trans. on Signal Processing, Bd. 43, Nr. 5, May 1995, S. 1232-1242, R. Roy and R. Kailath, "ESPRIT"-Estimation of Signal Parameters via Rotational Invariance Techniques", IEEE Trans. Acoust., Speech, Signal Processing, Bd. 37, July 1989, S. 984-995 beschrieben sind.

"Temporal-reference" Algorithmen beruhen auf der (vorherigen!) Kenntnis eines Teils des Signals, z.B. einer absichtlich eingefügten Trainingssequenz zur Identifikation des Teilnehmers. Im Global System for Mobile Communications, GSM, ist eine solche normgemäß vorgesehen und dient zur Schätzung des Funkkanals bzw. zur Identifikation der Basisstation. Im Gegensatz dazu benötigen "spatial-reference" Algorithmen keine vorherige Kenntnis der Teilnehmersignale, da diese Algorithmen die räumlich-geometrische Anordnung der einzelnen Antennenelemente in der Gruppe ausnützen.

Das optimale Empfangsverfahren zur Detektion von Teilnehmersignalen benutzt einen MLSE-Detektor (MLSE = maximum likelihood sequence estimation). Das MLSE-Verfahren ist z.B. in Lee/Messerschmitt, Digital Communication, S. 271-278, Kluwer Academic Publishers, Dordrecht, Niederlande, 1^{st} edition, 2^{nd} print, 1990 beschrieben. MLSE detektiert eine Empfangsfolge in optimaler Weise, d.h. mit geringstmöglicher Bitfehlerquote.

Eine Kombination von linearer Vorverarbeitung der Signale der Antennenelemente und einem MLSE ist in S. Ratnavel, A. Paulraj and A. G. Constantinides "MMSE Space-Time Equalization for GSM Cellular Systems", Proc. Institute of Electrical and Electronics Engineers, IEEE, Vehicular Technology Conference 1996, VTC '96, Atalanta, Georgia, S. 331-335 beschrieben.

Die linearen Vorverarbeitungsverfahren, wie bei Ratnavel erwähnt, haben nun den entscheidenden Nachteil, daß bei geringer winkelmäßiger Trennung (z.B. innerhalb der halben Antennenhauptkeulenbreite) des durch Mehrwegeausbreitung in mehrere Teilsignale aufgespaltenen und zeitlich verzögerten Teilnehmersignals das System wie ein linearer Entzerrer im Zeitbereich funktioniert. Bekanntlich sind aber lineare Entzerrerstrukturen aufgrund der Intersymbolinterferenz zufolge der Mehrwegeausbreitung (tiefe spektrale Nullstellen in der Übertragungsfunktion) nur sehr bedingt zur Entzerrung des Mobilfunkkanals geeignet.

### OFFENBARUNG DER ERFINDUNG

Der Erfindung liegt nun die Aufgabe zugrunde, das Verfahren bzw. die Vorrichtung der eingangs genannten Art zu verbessern, also im wesentlichen einen nichtlinearen Algorithmus in optimaler Weise mit einem MLSE-Detektor zu kombinieren.

Diese Aufgabe wird durch ein Verfahren der eingangs genannten Art erfindungsgemäß dadurch gelöst, daß zur Detektion der Teilnehmerdaten die Summe der gewichteten Signale der Einzelantennen direkt an einen MLSE (Maximum Likelihood Sequence Estimator) weitergeleitet wird, während das entscheidungsrückgekoppelte Verfahren stillgelegt wird oder zur kontinuierlichen Adaption der Gewichtsfaktoren dauernd zeitlich parallel dazu durchgeführt wird. Die Vorrichtung ist erfindungsgemäß dadurch gekennzeichnet, daß zur Detektion der Teilnehmerdaten ein MLSE vorgesehen ist, dessen Eingang an den Ausgang des Vorwärtsfilters angeschlossen ist.

Die Länge des Rückwärtsfilters ist dabei an die Länge des MLSE angepaßt. Dies bewirkt, daß alle jene Mehrwegeanteile des Teilnehmersignals, welche vom MLSE überhaupt verarbeitet werden können, zur Maximierung des Signal-Rausch-Abstandes zusammengefaßt werden, während Mehrwegeanteile, welche außerhalb des Verarbeitungsfensters des MLSE fallen, wie Gleichkanalstörungen behandelt, d.h. eliminiert werden.

Dieses Verfahren hat die Vorteile, daß Gleichkanalstörungen durch das Vorwärtsfilter eliminiert werden; daß exzessive Zeitdipersion (solche, die außerhalb des Zeitfensters des MLSE Detektors liegt), ebenfalls durch das Vorwärtsfilter eliminiert wird; daß infolge der nichtlinearen Adaption der Antennengewichte Signale aus der gleichen Richtung oder aus sehr knapp beisammen liegenden Richtungen weitaus besser als in linearen Strukturen ausgenützt werden; und daß übliche MLSE-Detektoren, wie sie heute bereits in GSM-Empfängern realisiert sind, zur Kombination der Mehrwegesignale Verwendung finden können.

### KURZE BESCHREIBUNG DER ZEICHNUNGEN

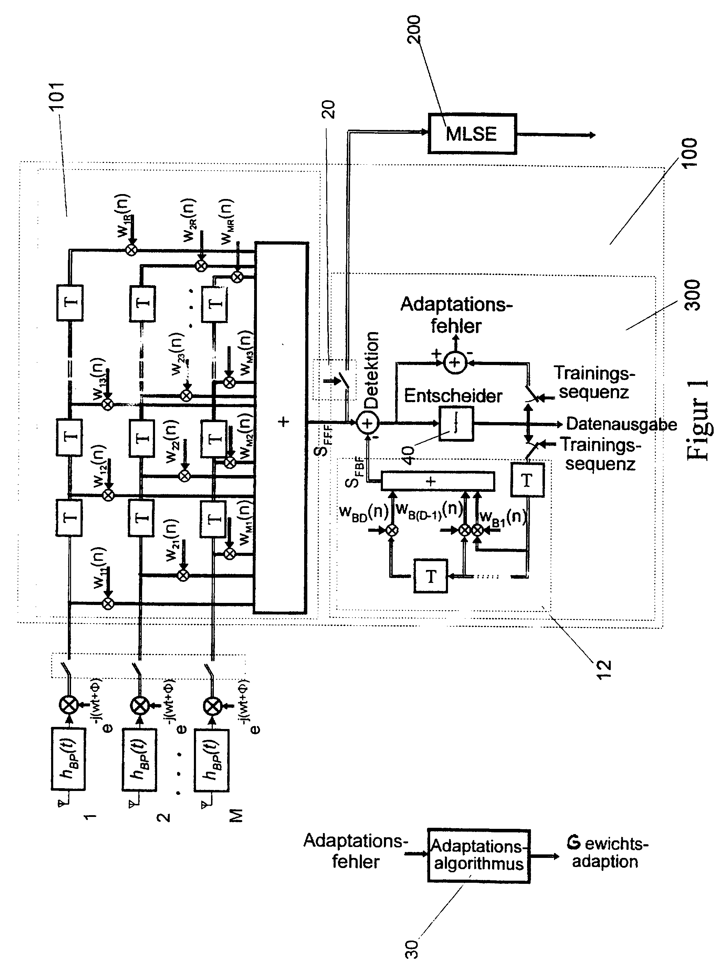

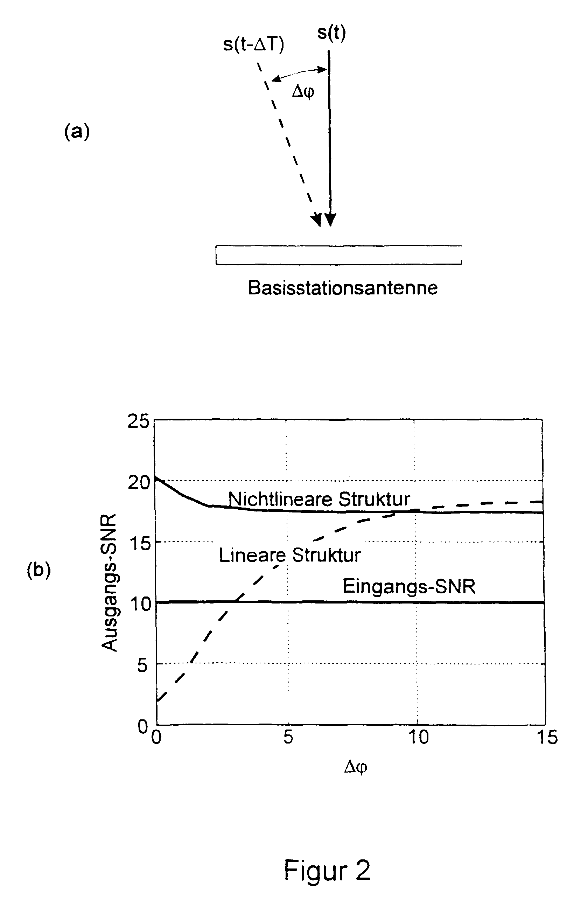

Die Erfindung wird anhand von Zeichnungen näher erläutert. Es zeigt: Fig. 1 eine Prinzipskizze des neuartigen Verfahrens; und Fig. 2 den Signal-Rausch-Abstand bei Verwendung der erfindungsgemäßen nichtlinearen Vorverarbeitung des Teilnehmersignals im Vergleich zu herkömmlichen linearen Verfahren.

### BESTE AUSFÜHRUNGSFORM DER ERFINDUNG

Fig. 1 zeigt eine Prinzipskizze des Verfahrens und der zugehörigen Empfängerstruktur.

Die Antennenelemente 1 bis M sind mit dem Vorwärtsfilter 101, charakterisiert durch seine Gewichtsfaktoren W₁₁ bis W_{MR} verbunden. Die nach den Antennenelementen plazierten Bandpaßfilter sind durch ihre Stoßantwort h_{BP}(t) charakterisiert. Die mit T bezeichneten Elemente bewirken eine Verzögerung des anliegenden Signals um eine Symboldauer T.

Das vom Vorwärtsfilter 101 aufbereitete Signal S_{FFF} wird dem Entscheider 40 zugeführt. Dieser entscheidet, ob das an seinem Eingang jeweils anliegende Signal, das stets verrauscht und verzerrt ist, logisch 1 oder logisch 0 bedeutet, und legt das entsprechende Signal an seinen Ausgang.

Dieses saubere Signal wird nun einem Rückwärtsfilter 12 zugeführt. Das Rückwärtsfilter 12 ist eine gemeinsame lineare Struktur, dessen Länge an die Verarbeitungsfensterlänge D des MLSE 200 angepaßt ist. Das vom Rückwärtsfilter 12 aufbereitete Signal S_{FBF} wird dem vom Vorwärtsfilter 101 kommenden Signal SFFF überlagert und gemeinsam dem Entscheider 40 zugeführt.

Der Schalter 20 wird zur Datendetektion umgelegt. Die nichtlineare Struktur 300 kann während der Datendetektion entweder zur kontinuierlichen Adaption der Antennengewichte verwendet oder stillgelegt werden. Der Adaptionsalgorithmus 30 adaptiert die Gewichtsfaktoren W₁₁ bis W_{MR} für das Vorwärtsfilter 101 und jene (W_{B1} bis W_{BD}) für das Rückwärtsfilter 12. Es kann dazu einer der bekannten Algorithmen, wie sie z.B. in S. Haykin, Adaptive Filter Theory, Prentice-Hall, Englewood Cliffs, NJ, 1986 beschrieben sind, eingesetzt werden.

Fig. 2a) zeigt ein einfaches, aber typisches Szenario, wie es an einer Basisstationsantenne im Mobilfunk auftritt. Zwei Teilsignale eines Teilnehmersignals treffen an der Basisstation ein, die sowohl winkelmäßig um den Wert Δϕ als auch zeitmäßig um ΔT separiert sind. Dies führt zu spektralen Einbrüchen in der Übertragungsfunktion des Kanals.

Fig. 2b) zeigt das durch Computersimulationen gewonnene Ausgangs-SNR über der Einfallswinkeldifferenz Δϕ, wobei für die Empfangsantennengruppe eine lineare Anordnung mit M=8 Antennenelementen und einem Abstand von 0,5λ zwischen diesen Elementen eingesetzt wird. Der Eingangs-Signal-Rausch-Abstand (SNR, Signal-to-Noise Ratio) pro Signal beträgt 10dB. Für den zeitlichen Abstand der Teilsignale wurde als typischer Wert ΔT=T gesetzt. Bei optimaler Kombination der Antennensignale sollte ein Ausgangs-SNR von rund 20dB möglich sein, was den erhöhten Aufwand der Antennengruppe gegenüber einfachen herkömmlichen Antennen rechtfertigt. Lineare Strukturen zeigen nun keinesfalls die gewünschte Verbesserung, wenn Δϕ<10° ist. Hingegen zeigt die erfindungsgemäße Struktur exzellentes Verhalten, unabhängig von der Winkeldifferenz Δϕ.

## Patentansprüche

1. Verfahren zum richtungsaufgelösten Empfang digitaler Daten durch eine phasengesteuerte Gruppenantenne, die mit einer Schaltung (30) versehen ist, mit der die Richtcharakteristik der Gruppenantenne durch eine adaptive Beeinflussung der Antennengewichtsfaktoren bei der Zusammenschaltung der Einzelantennen (1 ... M) einstellbar und adaptierbar ist, wobei zur Einstellung und Adaption der Richtcharakteristik ein entscheidungsrückgeloppeltes Verfahren eingesetzt wird, für welches eine nichtlineare Struktur (100) bestehend aus Vorwärtsfilter (101), Rückwärtsfilter (12) und Entscheider (40) vorgesehen ist, wobei die Antennensignale zunächst über das Vorwärtsfilter (101) geführt, dann dem Entscheider (40) zugeführt und vom Entscheider (40) über das Rückwärtsfilter (12) geführt werden, wonach das Ausgangssignal (S_{FBF}) des Rückwärtsfilters (12) vom Ausgangssignal (S_{FFF}) des Vorwärtsfilters (101) subtrahiert wird, **dadurch gekennzeichnet,** daß zur Detektion der Teilnehmerdaten die Summe der gewichteten Signale der Einzelantennen (1 ... M) direkt an einen Maximum Likelihood Sequence Estimator (200) weitergeleitet wird, während das entscheidungsrückgekoppelte Verfahren stillgelegt wird oder zur kontinuierlichen Adaption der Gewichtsfaktoren (W₁₁ bis W_{MR}) dauernd eingeschaltet bleibt und zeitlich parallel dazu durchgeführt wird.

2. Vorrichtung zum richtungsaufgelösten Empfang digitaler Daten, in der eine phasengesteuerte Gruppenantenne vorgesehen ist, die mit einer Schaltung (30) versehen ist, mit der die Richtcharakteristik der Gruppenantenne durch eine adaptive Beeinflussung der Antennengewichtsfaktoren bei der Zusammenschaltung der Einzelantennen (1 ... M) einstellbar und adaptierbar ist, wobei zur Einstellung und Adaption der Richtcharakteristik eine nichtlineare Struktur (100) bestehend aus Vorwärtsfilter (101), Rückwärtsfilter (12) und Entscheider (40) vorgesehen ist, wobei die Einzelantennen (1 ... M) an die Eingänge des Vorwärtsfilters (101) angeschlossen sind, der Ausgang des Vorwärtsfilters (101) an einen Subtrahierer angeschlossen ist, dessen Ausgang mit dem Eingang des Entscheiders (40) verbunden ist, dessen Ausgang mit dem Eingang des Rückwärtsfilters (12) verbunden ist, dessen Ausgang mit dem zweiten Eingang des Subtrahierers verbundene ist, **dadurch gekennzeichnet,** daß zur Detektion der Teilnehmerdaten ein Maximum Likelihood Sequence Estimator (200) vorgesehen ist, dessen Eingang an den Ausgang des Vorwärtsfilters angeschlossen ist.

## Claims

1. Method for the reception with directional resolution of digital data through a phase-controlled group antenna which is equipped with a circuit (30) with which the directional characteristic of the group antenna is adjustable and adaptable through adaptive influencing of the antenna weighting coefficients when the individual antennae (1 ... M) are interconnected, a decision feedback process being used to adjust and adapt the directional characteristic, for which process a nonlinear structure (100) comprising forward filter (101), backward filter (12) and discriminator (40) is provided, the antenna signals being guided via the forward filter (101), then led to the discriminator (40) and led from the discriminator (40) via the backward filter (12), after which the output signal (S_{FBF}) of the backward filter (12) is subtracted from the output signal (S_{FFF}) of the forward filter (101), **characterised in that**, to detect the subscriber data, the sum of the weighted signals of the individual antennae (1 ... M) is relayed directly to a Maximum Likelihood Sequence Estimator (200), whilst the decision feedback process is shut down, or remains permanently switched on and is carried out concurrently, in order to continuously adapt the weighting factors (W₁₁ to W_{MR}).

2. Device for the reception with directional resolution of digital data, in which device a phase-controlled group antenna is provided which is equipped with a circuit (30) with which the directional characteristic of the group antenna is adjustable and adaptable through adaptive influencing of the antenna weighting coefficients when the individual antennae (1 ... M) are interconnected, a nonlinear structure (100), comprising forward filter (101), backward filter (12) and discriminator (40) being provided to adjust and adapt the directional characteristic, the individual antennae (1 ... M) being connected to the inputs of the forward filter (101), the output of the forward filter (101) being connected to a subtracter, the output of which is connected to the input of the discriminator (40), the output of which is connected with the input of the backward filter (12), the output of which is connected with the second input of the subtracter, **characterised in that,** to detect the subscriber data, a Maximum Likelihood Sequence Estimator (200) is provided, the input of which is connected to the output of the forward filter.

## Revendications

1. Procédé pour la réception à résolution directionnelle de données numériques par une antenne de groupe contrôlée en phase, qui est munie d'un circuit (30), par l'intermédiaire duquel la caractéristique directionelle de l'antenne de groupe est susceptible d'être réglée et adaptée par une influence adaptative des facteurs pondéraux d'antenne au couplage communun des antennes individuelles (1... M), dans lequel pour le réglage et l'adaptation de la caractéristique directionnelle, on utilise un processus à rétroaction de décision, pour lequel est prévue une structure non linéaire (100) se composant d'un filtre avant ou amont (101); d'un filtre arrière ou aval (12) et d'un organe de décision (40), les signaux d'antenne étant d'abord conduits au filtre avant (101), puis à l'organe de décision (40) et de l'organe de décision (40) au filtre arrière (12), et dans lequel ensuite le signal de sortie (S_{FBF}) du filtre arrière (12) étant soustrait du signal de sortie (S_{FFF}) du filtre avant (101), caractérisé en ce que, pour détecter les données de participants, la somme des signaux pondérés des antennes individuelles (1...M) est conduite ensuite directement à un organe "Maximum Likelihood Sequence Estimator" (200) ou organe d'estimation de séquence de probabilité maximale, tandis que le processus de rétroaction de décision est à l'arrêt ou bien reste durablement en service et est mis en oeuvre de façon temporellement parallèle pour l'adaptation continue des facteurs pondéraux (W₁₁ jusqu'à W_{MR}).

2. Dispositif pour la réception à résolution directionnelle de données numériques, dans lequel est prévue une antenne de groupe contrôlée en phase, qui est munie d'un circuit (30), par l'intermédiaire duquel la caractéristique directionnelle de l'antenne de groupe est susceptible d'être réglée et adaptée par une influence adaptative des facteurs pondéraux d'antenne au couplage commun des antennes individuelles (1... M), dans lequel pour le réglage et l'adaptation de la caractéristique directionnelle, est prévue une structure non linéaire (100) se composant d'un filtre avant (101), d'un filtre arrière ou aval (12) et d'un organe de décision (40), dans lequel des antennes individuelles (1...M) sont raccordées aux entrées du filtre avant (101), la sortie du filtre avant (101 ) est reliée à un organe soustracteur dont la sortie est reliée à l'entrée de l'organe de décision (40), dont la sortie est reliée à l'entrée du filtre arrière (12), dont la sortie est reliée à la deuxième entrée de l'organe soustracteur, caractérisé en ce que, pour la détection des données de participants, est prévu un organe "Maximum Likelihood Sequence Estimator" (200) ou organe d'estimation de séquence de probabilité maximale, dont l'entrée est reliée à la sortie du filtre avant.
